# EUROPÄISCHE PATENTSCHRIFT

(11) **EP 1 623 321 B1**
(45) Veröffentlichungstag und Bekanntmachung des Hinweises auf die Patenterteilung: **20.03.2013**
(21) Anmeldenummer: 03798109.9
(22) Anmeldetag: 19.08.2003
(51) Int. Cl.: G05B 19/18, G06F 9/48

(54) **ECHTZEITFÄHIGES STEUERUNGSSYSTEM MIT EINER SPS-APPLIKATION UNTER EINEM NICHT ECHTZEITFÄHIGEN BETRIEBSSYSTEM**
REAL TIME-CAPABLE CONTROL SYSTEM HAVING AN SPS APPLICATION UNDER A NON-REAL TIME-CAPABLE OPERATING SYSTEM
SYSTEME DE COMMANDE APTE A L'EXPLOITATION EN TEMPS REEL AVEC UNE APPLICATION SPS SOUS SYSTEME D'EXPLOITATION NON ADAPTE A L'EXPLOITATION EN TEMPS REEL

(30) Priorität: 13.09.2002 DE 10242667
(43) Veröffentlichungstag der Anmeldung: 08.02.2006
(73) Patentinhaber: PHOENIX CONTACT GmbH & Co. KG, 32825 Blomberg (DE)
(72) Erfinder: VOTHKNECHT, Claus, 33189 Schlangen (DE); POLLMANN, Werner, 37671 Höxter (DE)
(74) Vertreter: Blumbach Zinngrebe
(86) Internationale Anmeldenummer: PCT/EP2003/009170
(87) Internationale Veröffentlichungsnummer: WO 2004/029804

(56) Entgegenhaltungen:
- DE-A1- 19 728 726
- PFEIFER T ET AL: "FLEXIBLE INTEGRATION OF VARIOUS FIELDBUS AND SENSOR/ACTUATOR BUS SYSTEMS INTO MACHINE TOOL CONTROL" MICROSYSTEM TECHNOLOGIES, BERLIN, DE, Bd. 3, Nr. 4, August 1997 (1997-08), Seiten 191-198, XP009021376 ISSN: 0946-7076

## Beschreibung

Die Erfindung betrifft ein echtzeitfähiges Steuerungssystem enthaltend einen Computer, bei welchem die SPS-Applikation unter der Kontrolle eines nicht echtzeitfähigen Betriebssystems abläuft.

In Steuerungssystemen ist es notwendig, die Ausgangsdaten an die Aktoren in Echtzeit auszugeben, um beispielsweise synchrone Bewegungen von Stellmotoren zu gewährleisten. Eine Steuerungs-Applikation, im folgenden SPS-Applikation genannt, muss dann unter der Kontrolle eines echtzeitfähigen Betriebssystems auf einem Computer ablaufen, um die Echtzeitbedingungen einzuhalten. Die SPS-Applikation enthält neben dem anwendungsspezifischen Steuerungsprogramm mindestens den Compiler oder Interpreter für den Ablauf des Steuerungsprogramms. Zusätzliche Funktionen für die Programmierung oder Verifikation des Steuerungsprogramms kann die SPS-Applikation ebenfalls enthalten. Würde man nun eine SPS-Applikation unter der Kontrolle eines nicht echtzeitfähigen Betriebssystems ablaufen lassen, so sind die Zeitpunkte für die Ausgabe der Ausgangsdaten nicht eindeutig vorhersehbar. Dabei ist es nicht entscheidend, dass andere Applikationen und das nicht echtzeitfähige Betriebssystem selbst für sich Zeit beanspruchen, sondern die Bestimmbarkeit des Zeitpunktes, an dem die Ausgangsdaten zum Aktor ausgegeben werden und Eingangsdaten gültig sind. Dieses Problem wird in bekannter Art und Weise dadurch gelöst, dass diese Steuerungssysteme, welche aus mindestens einem Computer, einem nicht echtzeitfähigem Betriebssystem und einer SPS-Applikation bestehen, durch zusätzliche Maßnahmen innerhalb des Computers zur Echtzeitfähigkeit des Steuerungssystems ertüchtigt werden. In DE 44 06 094 C2 ist ein Steuerungssystem offenbart, bei dem eine in einem Computer unter einem nicht echtzeitfähigen Betriebssystem ablaufende SPS-Applikation durch zusätzliche Maßnahme zur Echtzeitfähigkeit ertüchtigt wird. Hier werden durch einen sogenannten Verteiler die Interrupt-Anforderungen zum Prozessor derart beeinflusst, dass die SPS-Applikation bei einer Anforderung unverzüglich aktivierbar ist. Nachteilig ist hierbei, dass der sogenannte Verteiler für die Interrupt-Anforderungen für jeden Prozessor-Typ angepasst werden muss. Des weiteren müssen alle Interrupt-Anforderungen von diesem Verteiler behandelt werden, so dass die zeitlichen Anforderungen aller Applikationen, weleche Interrupt-Anforderungen stellen, bekannt sein müssen.

In DE 196 48 422 C2 ist ein Steuerungssystem beschrieben, bei dem eine echtzeitfähige SPS-Applikation in einem nicht echtzeitfähigen Betriebssystem implementiert ist. Hierbei wird ein bereits im Computer vorhandener Zeitgeber derart umprogrammiert, dass die SPS-Applikation der EchtzeitFähigkeit entsprechend regelmäßig aktiviert wird. Im laufenden Betrieb ist das nicht echtzeitfähige Betriebssystem so lange deaktiviert, während die echtzeitfähige SPS-Applikation aktiviert ist. Nach einer vorbestimmbaren Zeit wird durch den Zeitgeber die echtzeitfähige SPS-Applikation deaktiviert und das nicht echtzeitfähige Betriebssystem aktiviert. Das Aktivieren der echtzeitfähigen SPS-Applikation mit dem Deaktivieren des nicht echtzeitfähigen Betriebssystems wechseln sich in vorgebbarer Zeit mit dem Deaktivieren der echtzeitfähigen SPS-Applikation mit dem Aktivieren des nicht echtzeitfähigen Betriebssystems ab. Da beim in dem in DE 196 48 422 C2 beschriebenen Steuerungssystem das nicht echtzeitfähige Betriebssystem deaktiviert ist, während die echtzeitfähige SPS-Applikation aktiviert ist, müssen die zeitlichen Anforderungen aller weiteren Applikationen und Programme bekannt und beachtet werden, welche unter der Kontrolle des nicht echtzeitfähigen Betriebssystems aktiviert werden. Zusätzlich müssen die computerspezifischen Zeitgeber bekannt sein, da diese über die Interrupt-Steuerung die Aktivität zwischen nicht echtzeitfähigem Betriebssystem und echtzeitfähiger SPS-Applikation umschalten.

In US 5 903 752 ist ein Computer mit einem nicht echtzeitfähigen Betriebssystem beschrieben, der durch Hinzufügen eines Programms, eines sogenannten Realtime-Schedulers, die echtzeitfähigen Applikationen aktivieren kann. Dieser Realtime-Scheduler wird von einer nicht echtzeitfähigen Applikation gestartet, der dann die echtzeitfähigen Applikationen kontrolliert. Das besondere an dieser Art der Echtzeitfähigkeit ist, dass eine echtzeitfähige Applikation ohne Funktion, eine sogenannte Idle-Task vom Realtime-Scheduler nach Ablauf der Bedingungen für die echtzeitfähigen Applikationen aktiviert wird. In dieser Zeit, während die Idle-Task aktiviert ist, wird das nicht echtzeitfähige Betriebssystem aktiviert, das die nicht echtzeitfähigen Applikationen kontrolliert. Auch hier muss der Realtime-Scheduler sorgfältig implementiert werden, da zeitweise das nicht echtzeitfähige Betriebssystem unterbrochen wird. In dieser Zeit können keine Funktionen des nicht echtzeitfähigen Betriebssystems ausgeführt werden und keine nicht echtzeitfähigen Applikationen ausgeführt werden. Bei fehlerhaften echtzeitfähigen Applikationen kann somit der gesamte Computer ungewollt stillgelegt werden, wobei auch Datenverluste nicht auszuschließen sind.

In DE 197 29 726 A1 wird ein Roboter-Controller, der einen Computer aufweist, auf dem ein nicht echtzeitfähgiges Betriebssystem und zumindest ein Anwendungsprogramm unter der Kontrolle des nicht echtzeitfähigen Betriebssystems auf dem Roboter-Controller abläuft. Der Roboter-Controller weist zahlreiche zusätzliche Einheiten wie z. B. eine Taskswechseleinheit auf, die bei jedem Wechsel des Prozessor-Typs angepasst werden muss.

Der Erfindung liegt die Aufgabe zugrunde, ein echtzeitfähiges Steuerungssystem mit zur Verfügung zu stellen, wobei die SPS-Applikation in einem Computer unter Kontrolle eines nicht echtzeitfähigen Betriebssystems abläuft, wobei die volle Funktionalität des nicht echtzeitfähigen Betriebssystems erhalten bleibt.

Die Aufgabe wird erfindungsgemäß durch die im Anspruch 1 angegebenen Merkmale gelöst. Eine SPS-Applikation enthält dabei alle notwendigen Funktionen, welche zum Ablauf eines anwendungsspezifischen Steuerungsprogramms notwendig sind. Diese sind beispielsweise ein Compiler, Interpreter oder Programmier- oder Befehlseingabewerkzeuge. In der Regel ist die SPS-Applikation ist eine unter der Kontrolle eines nicht echtzeitfähigen Betriebssystems, beispielsweise das allgemein bekannte Windows NT, 95, 98, 2000, CE, XP der Firma Microsoft, ablaufende Software ab. Als echtzeitfähig wird im folgenden die vorbestimmbare Zeit verstanden, in der regelmäßig Ausgangsdaten an die anwendungsspezifischen Aktoren ausgegeben werden. Das erfindungsgemäße Steuerungssystem ist beispielsweise für Positionierantriebe geeignet, welche in vorbestimmten Zeitabständen mit engen Toleranzgrenzen die berechneten Ausgabedaten ihrer jeweils neuen Position erhalten. Die vorbestimmten Zeitabstände für die Ausgabe der Ausgabedaten werden mit einer zusätzlich in den PC eingesteckten Feldbus-Anschaltkarte und über den Feldbus angeschlossene Feldbus-Module realisiert. Feldbus-Anschaltkarten sind bekannt, wie sie beispielsweise im "Anwenderhandbuch Allgemeine Einführung in das INTERBUS-System, IBS SYS INTRO G4 UM" beschrieben sind. Der Zeitpunkt für den Beginn der SPS-Applikation zur Berechnung der Ausgabedaten ist aufgrund der nicht Echtzeitfähigkeit des Betriebssystems nicht vorbestimmbar, es ist jedoch sichergestellt, dass innerhalb der vorbestimmten Zeitabstände die SPS-Applikation einmal Ausgangsdaten berechnet hat und an die Feldbus-Anschaltbaugruppe übergeben hat. Die Eingangsdaten, welche beispielsweise Zustände von Sensoren oder Endschaltern repräsentieren, werden von der Feldbus-Anschaltbaugruppe ebenfalls in den vorbestimmten Zeitabständen eingelesen und stehen der SPS-Applikation zur Berechnung der Ausgangsdaten zur Verfügung. Der Vollständigkeit halber sie noch erwähnt, dass die Übertragung der Daten von der Feldbus-Anschaltbaugruppe zu den Positionierantrieben über einen Feldbus, beispielsweise Interbus, übertragen werden, wobei die Positionierantriebe ein Feldbus-Modul enthalten oder über ein Feldbus-Modul die Ausgangsdaten erhalten. Die Daten von den Sensoren oder Endschaltern zu der Feldbus-Anschaltbaugruppe werden über den selben Feldbus, beispielsweise Interbus, übertragen, wobei die Sensoren oder Endschalter jeweils ein Feldbus-Modul enthalten oder über ein Feldbus-Modul die Eingangsdaten bereitstellen.

### Bezugzeichenliste

- 1:: Computer
- 2:: Feldbus-Anschaltbaugruppe
- 3:: Feldbus
- 4-7:: Feldbus-Modul
- 8:: Computer-Kern
- 9:: nicht echtzeitfähiges Betriebssystem
- 10:: SPS-Applikation
- 11:: nicht echtzeitfähige Applikationen
- 12:: Steuerung des Feldbusses
- 13:: Host-Interface
- 14:: Umschaltzeit zur SPS-Applikation
- 15:: Ablauf des Steuerungsprogramms in der SPS-Applikation
- 16:: Ablauf des Betriebssystems
- 17:: Ereignisanforderung der Feldbus-Anschaltbaugruppe
- 18:: Feldbus-Zyklus
- 19:: Ausgabezeitpunkt der Ausgangsdaten am Feldbus-Modul
- 20:: Eingabezeitpunkt der Eingangsdaten am Feldbus-Modul
- 21:: Gültigkeit der Eingangsdaten für die SPS-Applikation
- 22:: Gültigkeit der Ausgangsdaten von der SPS-Applikation
- 23:: festes Zeitraster

### Überschrift der Figuren:

Fig. 1: zeigt eine beispielhafte Anordnung mit Computer, Feldbus und Feldbus Modulen.
Fig. 2: zeigt die in einer Übersicht die funktionalen Einheiten für eine SPS-Applikation in Verbindung mit einer Feldbus-Anschaltbaugruppe.
Fig. 3: zeigt in einem Diagramm das zeitliche Verhalten der SPS-Applikation mit dem nicht echtzeitfähigen Betriebssystem.

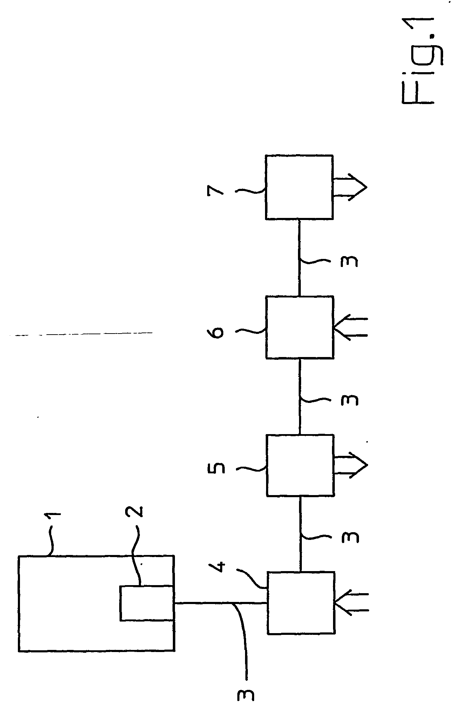

Die in Fig. 1 dargestellte beispielhafte Anordnung beinhaltet einen Computer 1, in dem eine SPS-Applikation abläuft, welches Ausgangsdaten für die Feldbusmodule 5 oder nicht näher beschriebene Positionierantriebe 7 berechnet und Eingangsdaten von den Feldbusmodulen 4, 6 erhält. Die Feldbus-Anschaltbaugruppe 2 bildet dabei die Schnittstelle zwischen Computer 1 und dem Feldbus 3, wobei über den Feldbus 3 die im Computer berechneten Ausgangsdaten zum Feldbus-Modul 4 oder Positionierantrieb 7 und die Eingangsdaten von den Feldbusmodulen 4, 6 zum Computer übertragen werden. Als Feldbus ist beispielsweise der Interbus vorgesehen, es können aber auch andere Feldbusse verwendet werden.

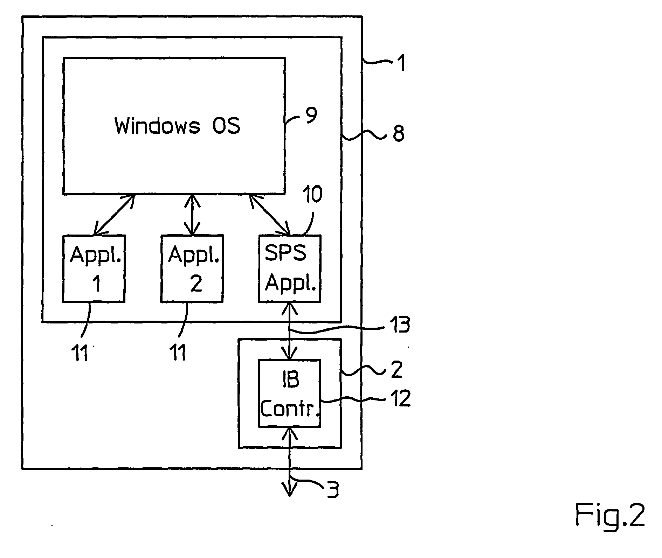

In dem in Fig. 2 dargestellten Computer 1 läuft das nicht echtzeitfähige Betriebssystem 9 ab, welches die Aktivität der Applikationen 10, 11 steuert. Auch die Aktivität der SPS-Applikation 10 wird vom nicht echtzeitfähigen Betriebssystem 9 gesteuert. Das nicht echtzeitfähige Betriebssystem 9 und alle Applikationen 10, 11 laufen im Computer-Kern 8 ab. Als Computer-Kern 8 werden hierbei alle Hardware-Komponenten, das nicht echtzeitfähige Betriebssystem 9 und alle Applikationen 10, 11 angesehen, die zur Funktion des Computers notwendig sind. Über ein im Computer standardmäßig vorhandene Host-Interface 13, beispielsweise ein PCI-Interface, ist eine Feldbus-Anschaltbaugruppe 2 mit dem Computer-Kern 8 verbunden. Die Feldbus-Anschaltbaugruppe 2 beinhaltet die Steuerung 12 des Feldbusses 3, wobei diese Steuerung 12 des Feldbusses 3 von der SPS-Applikation 10 parametriert wird. Die Feldbus-Anschaltbaugruppe 2 stellt dem Host-Interface 13 die Eingangsdaten von den Feldbus-Modulen 4, 6 zur Verfügung, während sie die Ausgangsdaten für die Feldbus-Module 5, 7 über das Host-Interface erhält. Die Bereitstellung der Echtzeitfähigkeit erfolgt in der Feldbus-Anschaltbaugruppe 2, dabei erfolgt die Steuerung des Feldbusses 12, unter Echtzeitbedingungen. Durch die konstante vorhersehbare Zykluszeit 23 für den Feldbus erfüllen die Ausgangsdaten und Eingangsdaten ebenfalls die Echtzeitbedingungen.

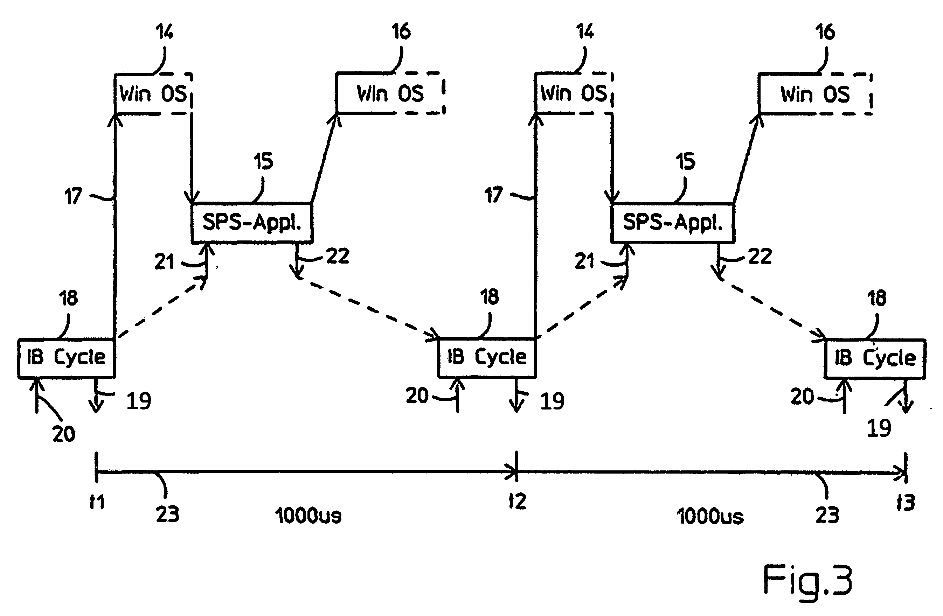

Der zeitliche Ablauf der Aktivitäten der Zykluszeit 23 für den Feldbus und die Steuerung für den Feldbus 12 in Beziehung mit der SPS-Applikation 10 im Computer-Kern 8 sind in Fig. 3 dargestellt. Im skizzierten Beispiel wird das Ende einer Zykluszeit 18 für den Feldbus mit einer Ereignisanforderung 17 an Computer-Kern 8 gemeldet. Ereignisanforderungen sind beispielsweise Interrupt-Anforderungen oder sonstige Zustandsmeldungen. Nach einer nicht bestimmbaren Zeit, der sogenannten Umschaltzeit 14 aktiviert das nicht echtzeitfähige Betriebssystem die SPS-Applikation 10 im Computerkern 8. Der Ablauf des Steuerungsprogramms 15 innerhalb der SPS-Applikation beginnt mit dem Einlesen der Eingangsdaten von der Feldbus-Anschaltbaugruppe 2 über das Host-Interface 13, anschließend erfolgt die Berechnung der Ausgangsdaten in Abhängigkeit der Eingangsdaten und endet mit der Ausgabe der Ausgangsdaten an die Feldbus-Anschaltbaugruppe 2 über das Host-Interface 13. Die Feldbus-Anschaltbaugruppe ist derart parametriert, dass der Ablauf des nächst folgenden Feldbus-Zyklusses 18 erst dann gestartet wird, wenn die Zeit des vorgebbaren Zeitrasters 23 zum Start des vorherigen Feldbus-Zyklusses abgelaufen ist. Nach Ablauf des Feldbus-Zyklusses 18 werden die Ausgangsdaten an die Feldbusmodule 5, 7 ausgegeben und die neuen Eingangsdaten von denn Feldbus-Modulen 4, 6 eingelesen. So ist sichergestellt, dass die Ausgabezeitpunkte 19 der Ausgangsdaten im festen vorgebbaren Zeitraster 23 zueinander stehen. Im in Fig. 3 dargestellten Beispiel ist für das zeitraster 1000 us vorgegeben, das bedeutet, dass mit einer sehr hohen Genauigkeit alle 1000 us die Ausgangsdaten ausgegeben werden. Wenn das Steuerungsprogramm 15 innerhalb der SPS-Applikation beispielsweise 300 us und der Ablauf des Feldbus-Zyklusses 18 400 us benötigen, so kann die Umschaltzeit 14 zur SPS-Applikation zwischen 0 us und 300 us betragen. Die Steuerung 12 des Feldbusses erfolgt dabei derart, dass ein Feldbus-Zyklus 18 im festen Zeitraster 23 alle 1000 us gestartet wird.

## Patentansprüche

1. Echtzeitfähiges Steuerungssystem, enthaltend einen Computer (1) mit einem Computer-Kern (8), umfassend ein nicht echtzeitfähiges Betriebssystem (9) und zumindest eine SPS-Applikation (10), welche unter der Kontrolle des nicht echtzeitfähigen Betriebssystems (9) auf dem Computer (1) abläuft,
**gekennzeichnet durch**,
eine Feldbus-Anachaltbaugruppe (2), welche mit dem Computer-Kern (8) über ein Host-Interface (13) verbunden ist,
einen Feldbus mit einem festen Zeitraster und einer konstanten vorhersehbaren Zykluszeit (3) und mindestens ein über den Feldbus (3) angeschaltetes Feldbus-Modul (4, 5, 6, 7),
wobei die Datenübertragung zwischen Feldbus-Anschaltbaugruppe (2) und mindestens einem Feldbus-Modul (4, 5, 6, 7) innerhalb eines Feldbuszyklusses (18) abläuft, und wobei die Echtzeitfähigkeit des Steuerungssystems **durch** das feste Zeitraster (23) für den Ablauf des Feldbuszyklusses (18) erreicht wird,
und wobei die SPS-Applikation (10) über das Host-Interface (13) Eingangsdaten von dem wenigstens einen Feldbus-Modul (4, 5, 6, 7) erhält und einliest und Ausgangsdaten für das wenigstens eine Feldmodul (4, 5, 6, 7) berechnet und
ausgibt.

2. Echtzeitfähiges Steuerungssystem nach Anspruch 1,
**dadurch gekennzeichnet,**
**dass** die SPS-Applikation (10) unter der vollständige Kontrolle des nicht echtzeitfähigen Betriebssystems (9) abläuft.

3. Echtzeitfähiges Steuerungssystem nach Anspruch 1 oder 2,
**dadurch gekennzeichnet,**
**dass** die SPS-Applikation (10) eine im Computerkern (8) ablauffähige Software ist.

4. Echtzeitfähiges Steuerungssystem nach Anspruch 2 oder 3,
**dadurch gekennzeichnet,**
**dass** die SPS-Applikation (10) Funktionen für den Ablauf (15) eines anwendungsspezifischen Steuerungsprogramms bereitstellt.

5. Echtzeitfähiges Steuerungssystem nach einem der Ansprüche 1 bis 4,
**dadurch gekennzeichnet,**
**dass** das Host-Interface (13) eine PCI-Schnittstelle ist.

6. Echtzeitfähiges Steuerungssystem nach einem der Ansprüche 1 bis 5,
**dadurch gekennzeichnet,**
**dass** das Ende eines Feldbuszyklusses (18) mit einer Ereignisanforderung (17), insbesondere einer Interrupt-Anforderung, an den Computer-Kern (8) gemeldet wird.

7. Echtzeitfähiges Steuerungssystem nach einem der Ansprüche 1 bis 6,
**dadurch gekennzeichnet,**
**dass** der nächstfolgende Feldbuszykluss (18) erst nach Ablauf des Zeitrasters (23) des vorherigen Feldbuszyklusses (18) gestartet wird.

8. Echtzeitfähiges Steuerungssystem nach einem der Ansprüche 1 bis 7,
**dadurch gekennzeichnet,**
**dass** die Feldbus-Anschaltbaugruppe (2) die über das Host-Interface (13) von der SPS-Applikation (10) erhaltenen Ausgangsdaten über einen Feldbus (3) an die am Feldbus angeschlossenen Feldbus-Module (5, 7) ausgibt.

9. Echtzeitfähiges Steuerungssystem nach einem der Ansprüche 1 bis 7,
**dadurch gekennzeichnet,**
**dass** die Feldbus-Anschaltbaugruppe (2) die von den am Feldbus (3) angeschlossen Feldbus-Modulen (4, 6) eingelesenen Eingangsdaten über das Host-Interface (13) der SPS-Applikation (10) bereitstellt.

10. Echtzeitfähiges Steuerungssystem nach einem der Ansprüche 1 bis 9,
**dadurch gekennzeichnet,**
**dass** die Feldbus-Anschaltbaugruppe (2) eine Einrichtung (12) zur Steuerung des Feldbusses enthält.

11. Echtzeitfähiges Steuerungssystem nach Anspruch 10,
**dadurch gekennzeichnet,**
**dass** die Einrichtung (12) zur Steuerung des Feldbusses den zeitlichen Ablauf des Feldbuszyklusses steuert.

12. Echtzeitfähiges Steuerungssystem nach einem der Ansprüche 10 oder 11,
**dadurch gekennzeichnet,**
**dass** die Einrichtung (12) zur Steuerung des Feldbusses den zeitlichen Ablauf in dem festen Zeitraster (23) steuert.

13. Echtzeitfähiges Steuerungssystem nach einem der Ansprüche 1 bis 12,
**dadurch gekennzeichnet,**
**dass** das feste Zeitraster (23) parametrierbar ist.

14. Echtzeitfähiges Steuerungssystem nach einem der Ansprüche 1 bis 13,
**dadurch gekennzeichnet,**
**dass** der Feldbus (3) ein Interbus ist.

## Claims

1. Real-time capable control system, containing a computer (1) having a computer core (8), including a non-real-time capable operating system (9) and at least one PLC application (10) which is executed on the computer (1) under the control of the non-real-time capable operating system (9),
**characterised by**
a field bus connecting assembly (2) which is connected to the computer core (8) via a host interface (13),
a field bus having a fixed time frame and a constant predictable cycle time (3), and at least one field bus module (4, 5, 6, 7) connected via the field bus (3),
wherein the data transfer between the field bus connecting assembly (2) and at least one field bus module (4, 5, 6, 7) is executed within a field bus cycle (18),
and wherein the real-time capability of the control system is achieved by the fixed time frame (23) for the execution of the field bus cycle (18),
and wherein the PLC application (10) obtains and reads-in input data from the at least one field bus module (4, 5, 6, 7) via the host interface (13) and calculates and outputs output data for the at least one field module (4, 5, 6, 7).

2. Real-time capable control system as claimed in claim 1,
**characterised in that** the PLC application (10) is executed under the full control of the non-real-time capable operating system (9).

3. Real-time capable control system as claimed in claim 1 or 2,
**characterised in that** the PLC application (10) is software capable of being executed in the computer core (8).

4. Real-time capable control system as claimed in claim 2 or 3,
**characterised in that** the PLC application (10) provides functions for the execution (15) of an application-specific control program.

5. Real-time capable control system as claimed in any one of claims 1 to 4,
**characterised in that** the host interface (13) is a PCI interface.

6. Real-time capable control system as claimed in any one of claims 1 to 5,
**characterised in that** the end of a field bus cycle (18) is signalled to the computer core (8) with an event request (17), in particular an interrupt request.

7. Real-time capable control system as claimed in any one of claims 1 to 6,
**characterised in that** the next field bus cycle (18) is started only after the time frame (23) of the previous field bus cycle (18) has run out.

8. Real-time capable control system as claimed in any one of claims 1 to 7,
**characterised in that** the output data obtained from the PLC application (10) via the host interface (13) are output by the field bus connecting assembly (2) via a field bus (3) to the field bus modules (5, 7) connected to the field bus.

9. Real-time capable control system as claimed in any one of claims 1 to 7,
**characterised in that** the input data read-in from the field bus modules (4, 6) connected to the field bus (3) are provided by the field bus connecting assembly (2) to the PLC application (10) via the host interface (13).

10. Real-time capable control system as claimed in any one of claims 1 to 9,
**characterised in that** the field bus connecting assembly (2) contains a device (12) for controlling the field bus.

11. Real-time capable control system as claimed in claim 10,
**characterised in that** the device (12) for controlling the field bus controls the time sequence of the field bus cycle.

12. Real-time capable control system as claimed in any one of claims 10 or 11,
**characterised in that** the device (12) for controlling the field bus controls the time sequence in the fixed time frame (23).

13. Real-time capable control system as claimed in any one of claims 1 to 12,
**characterised in that** the fixed time frame (23) can be parameterised.

14. Real-time capable control system as claimed in any one of claims 1 to 13,
**characterised in that** the field bus (3) is an Interbus.

## Revendications

1. Système de commande apte à l'exploitation en temps réel, comprenant un ordinateur (1) avec un noyau (8) d'ordinateur doté d'un système d'exploitation (9) inapte à l'exploitation en temps réel et d'au moins une application CPE (10) exécutée sur l'ordinateur (1) sous le contrôle du système d'exploitation (9) inapte à l'exploitation en temps réel,
**caractérisé par** :
un module de connexion (2) de bus de terrain qui est relié au noyau (8) d'ordinateur par l'intermédiaire d'une interface hôte (13),
un bus de terrain (3) avec un créneau temporel fixe et un temps de cycle prévisible constant, et au moins un module (4, 5, 6, 7) de bus de terrain connecté par le bus de terrain (3),
la transmission de données entre le module de connexion (2) de bus de terrain et au moins un module (4, 5, 6, 7) de bus de terrain étant exécutée lors d'un cycle (18) de bus de terrain, et l'aptitude à l'exploitation en temps réel du système de commande étant obtenue par le créneau temporel (23) fixe pour l'exécution du cycle (18) de bus de terrain,
et l'application CPE (10) recevant et emmagasinant des données d'entrée de l'au moins un module (4, 5, 6, 7) de bus de terrain par l'intermédiaire de l'interface hôte (13), et calculant et sortant des données de sortie pour l'au moins un module (4, 5, 6, 7) de bus de terrain.

2. Système de commande apte à l'exploitation en temps réel selon la revendication 1, **caractérisé en ce que** :
l'application CPE (10) est exécutée sous le contrôle intégral du système d'exploitation (9) inapte à l'exploitation en temps réel.

3. Système de commande apte à l'exploitation en temps réel selon la revendication 1 ou 2, **caractérisé en ce que** :
l'application CPE (10) est un programme qui peut être exécuté dans le noyau (8) d'ordinateur.

4. Système de commande apte à l'exploitation en temps réel selon la revendication 2 ou 3, **caractérisé en ce que** :
l'application CPE (10) prépare des fonctions pour l'exécution (15) d'un programme de commande spécifique à l'application.

5. Système de commande apte à l'exploitation en temps réel selon l'une des revendications 1 à 4, **caractérisé en ce que** :
l'interface hôte (13) est une interface PCI.

6. Système de commande apte à l'exploitation en temps réel selon l'une des revendications 1 à 5, **caractérisé en ce que** :
la fin d'un cycle (18) de bus de terrain est signalée par une demande d'événement (17), en particulier par une demande d'interruption au noyau (8) d'ordinateur.

7. Système de commande apte à l'exploitation en temps réel selon l'une des revendications 1 à 6, **caractérisé en ce que** :
le cycle (18) de bus de terrain suivant n'est démarré qu'après écoulement du créneau temporel (23) du cycle (18) de bus précédent.

8. Système de commande apte à l'exploitation en temps réel selon l'une des revendications 1 à 7, **caractérisé en ce que** :
le module de connexion de bus de terrain (2) délivre par l'intermédiaire d'un bus de terrain (3) les données de sortie reçues de l'application CPE (10) par l'intermédiaire de l'interface hôte (13) aux modules de bus de terrain (5, 7) reliés au bus de terrain.

9. Système de commande apte à l'exploitation en temps réel selon l'une des revendications 1 à 7, **caractérisé en ce que** :
le module de connexion de bus de terrain (2) délivre les données d'entrée emmagasinées par les modules de bus de terrain (4, 6) reliés au bus de terrain (3) par l'intermédiaire de l'interface hôte (13) de l'application CPE (10).

10. Système de commande apte à l'exploitation en temps réel selon l'une des revendications 1 à 9, **caractérisé en ce que** :
le module de connexion de bus de terrain (2) comprend un dispositif (12) pour la commande du bus de terrain.

11. Système de commande apte à l'exploitation en temps réel selon la revendication 10, **caractérisé en ce que** :
le dispositif (12) pour la commande du bus de terrain commande l'exécution temporelle du cycle de bus de terrain.

12. Système de commande apte à l'exploitation en temps réel selon la revendication 10 ou 11, **caractérisé en ce que** :
le dispositif (12) pour la commande du bus de terrain commande l'exécution temporelle pendant le créneau temporel (23) fixe.

13. Système de commande apte à l'exploitation en temps réel selon l'une des revendications 1 à 12, **caractérisé en ce que** :
le créneau temporel (23) fixe est paramétrable.

14. Système de commande apte à l'exploitation en temps réel selon l'une des revendications 1 à 13, **caractérisé en ce que** :
le bus de terrain (3) est un Interbus.
